# FASCICULE DE BREVET EUROPEEN

(11) **EP 3 650 885 B1**
(45) Date de publication et mention de la délivrance du brevet: **07.04.2021**
(21) Numéro de dépôt: 19206862.5
(22) Date de dépôt: 04.11.2019
(51) Int. Cl.: G01S 7/40, G01S 13/00, H01Q 3/26, G01S 7/03, G01S 13/02

(54) **DETERMINATION DE DEPHASAGES D'EMISSION POUR UN RADAR A PLUSIEURS VOIES D'EMISSION JUXTAPOSEES**
BESTIMMUNG DER EMISSIONSPHASENVERSCHIEBUNGEN FÜR EINEN RADAR MIT MEHREREN NEBENEINANDER ANGEORDNETEN EMISSIONSWEGEN
DETERMINATION OF TRANSMISSION DEPHASING FOR A RADAR WITH SEVERAL JUXTAPOSED TRANSMISSION CHANNELS

(30) Priorité: 09.11.2018 FR 1860352
(43) Date de publication de la demande: 13.05.2020
(73) Titulaire: Office National d'Etudes et de Recherches Aérospatiales, 91120 Palaiseau (FR)
(72) Inventeur: CATTENOZ, Mathieu, 92240 MALAKOFF (FR); BROUARD, Philippe, 92170 VANVES (FR)
(74) Mandataire: Plasseraud IP

(56) Documents cités:
- US-A1- 2017 234 971
- CATTENOZ MATHIEU ET AL: "An experimental demonstration of a posteriori digital calibration of MIMO radar system", 2014 INTERNATIONAL RADAR CONFERENCE, IEEE, 13 octobre 2014 (2014-10-13), pages 1-5, XP032746224, DOI: 10.1109/RADAR.2014.7060377
- SHIMURA TOSHIHIRO ET AL: "Millimeter-wave TX phased array with phase adjusting function between transmitters for hybrid beamforming with interleaved subarrays", 2016 EUROPEAN RADAR CONFERENCE (EURAD), EUMA, 5 octobre 2016 (2016-10-05), pages 425-428, XP033041518, DOI: 10.1109/EUMC.2016.7824658
- CATTENOZ MATHIEU ET AL: "Coherent collocated MIMO radar: A study on real data", 2013 14TH INTERNATIONAL RADAR SYMPOSIUM (IRS), IEEE, vol. 1, 19 juin 2013 (2013-06-19), pages 83-88, XP032477657, ISBN: 978-1-4673-4821-8 [extrait le 2013-08-14]

## Description

La présente invention concerne un procédé de détermination de déphasages d'émission pour un radar qui possède plusieurs voies d'émission juxtaposées. Elle peut trouver application dans de nombreux domaines, y compris la surveillance par radar pour détecter des intrusions dans un espace à sécuriser, les télécommunications, etc.

De façon connue, un radar à dépointage électronique et/ou à formation de faisceau comprend plusieurs voies d'émission qui alimentent des éléments rayonnants juxtaposés dans une antenne-réseau. Chaque voie d'émission comporte une entrée pour recevoir le signal à émettre, un déphaseur variable, un amplificateur et un élément rayonnant qui est alimenté avec le signal à émettre, après déphasage et amplification de ce signal. La direction du faisceau de rayonnement qui est produit par l'antenne-réseau pour émettre le signal, ainsi que la forme de ce faisceau, c'est-à-dire le diagramme de rayonnement du radar, sont ajustées par des valeurs de déphasages («phase shifts» en anglais) qui sont appliqués individuellement aux voies d'émission. Toutefois, des contributions involontaires de déphasages peuvent exister en outre entre des voies d'émission du radar qui sont différentes, de sorte que les déphasages qui sont produits réellement entre ces voies d'émission ne correspondent pas précisément aux valeurs de déphasages qui sont voulues. Il en résulte une incertitude dans la direction et dans la forme du faisceau de rayonnement qui est produit par le radar.

En particulier, les radars à entrées et sorties multiples, désignés par l'acronyme MIMO pour «multiple input - multiple output» en anglais, sont de ce type et présentent cette incertitude sur les déphasages qui existent entre voies d'émission différentes.

De façon générale dans la présente description, on entend par déphasage qui existe entre deux voies d'émission ou entre deux signaux, une différence entre deux valeurs de phase qui sont relatives une-à-une aux deux voies d'émission ou aux deux signaux. Par extension et équivalence, on entendra aussi par un tel déphasage un décalage temporel qui existe entre les fonctionnements des deux voies d'émission ou qui existe entre les deux signaux.

De façon aussi connue, on entend par modulations qui sont orthogonales des modulations qui permettent, par filtrage, de séparer des composantes d'un signal qui comportent chacune l'une de ces modulations, différente de la modulation de chaque autre composante du signal. Plus précisément, le résultat d'un filtrage conforme à l'une des modulations, lorsqu'il est appliqué à des composantes de signal qui sont modulées individuellement, est non nul pour la composante du signal qui possède la modulation du filtre, et nul ou sensiblement nul pour chaque composante du signal qui possède une modulation orthogonale à celle du filtre. Dans la suite, le libellé de «modulations orthogonales» désignera aussi bien des modulations qui sont strictement orthogonales que des modulations qui sont sensiblement orthogonales, c'est-à-dire pour lesquelles le résultat du filtrage peut être considéré comme sensiblement nul, ou inférieur à un seuil prédéterminé.

En particulier, les radars de type MIMO permettent d'appliquer des modulations qui sont orthogonales à des voies d'émission qui sont différentes au sein de chacun de ces radars.

De façon générale, l'invention qui est l'objet de la présente demande de brevet peut être combinée avec tout type connu de modulation, y compris des modulations par codes désignées par l'acronyme CDMA pour «code-division multiple access» en anglais, des modulations par fréquences distinctes désignées par FDMA pour «frequency-division multiple access», des modulations par décalages temporels désignées par TDMA pour «time-division multiple access», etc.

Dans ce cadre, un but de l'invention consiste à permettre un contrôle amélioré du diagramme de rayonnement d'un radar à plusieurs voies d'émission.

Un but annexe de l'invention est de permettre qu'une telle amélioration du contrôle du faisceau puisse être obtenue sans utiliser de composants de test spécifiques, ni que des conditions de test particulières soient nécessaires. Notamment, il est souhaitable que l'amélioration du contrôle du faisceau qui est produit par le radar puisse être obtenue sans nécessiter d'opérations de maintenance spécifiques, en ne résultant que d'utilisations de mission du radar.

Encore un autre but de l'invention est de procurer un diagnostic de l'altération que peut subir dans la durée un radar à plusieurs voies d'émission, qu'il s'agisse de vieillissement ou de dysfonctionnement de certains de ses composants d'émission, éventuellement pour commander des opérations de maintenance du radar ou des actions de correction de certains de ses paramètres de fonctionnement. Il est connu de par le document XP032746224 (Cattenoz Mathieu International Radar Conference, IEEE 13 Octobre 2014) de réaliser une calibration digitale a posteriori d'un radar de type MIMO. Le document US2017/234971A1 dévoile un procédé de calibration en émission, interne au radar par le biais d'une antenne patch afin de recevoir une composante du signal émis pour d'ajuster la phase de l'émetteur.

Pour cela, un premier aspect de l'invention propose un procédé de détermination d'au moins un déphasage d'émission d'un radar qui comprend au moins deux voies d'émission qui sont juxtaposées et au moins une voie de réception. L'invention s'applique quand le radar est agencé pour que chacune de ses voies d'émission produise une radiation d'émission modulée conformément à une modulation qui est affectée à cette voie d'émission, et qui est orthogonale à la modulation qui est affectée à chaque autre des voies d'émission. Une autre condition pour l'invention est que, lorsque la voie de réception du radar détecte un signal de retour, ce signal de retour soit filtré conformément à chaque modulation. De cette façon, pour chaque modulation, quelle que soit la voie d'émission pour laquelle elle est utilisée, une composante du signal de retour qui possède cette modulation est isolée. Alors, le procédé de l'invention est caractérisé en ce qu'il comprend les étapes suivantes :
/1/ activer les voies d'émission pour produire les radiations d'émission modulées, et activer la voie de réception pour détecter le signal de retour, puis filtrer ce signal de retour conformément à chaque modulation ;
/2/ séparément pour chaque modulation : déterminer une valeur d'un déphasage entre émission et réception, appelé déphasage d'émission-réception pour cette modulation, qui existe entre la radiation d'émission produite et modulée conformément à la modulation et la composante du signal de retour qui a été isolée conformément à la même modulation, ce déphasage d'émission-réception étant déterminé pour des points de passage de signal qui sont fixes à l'intérieur du radar pour chaque voie d'émission et pour toutes les composantes du signal de retour ; puis
/3/ déterminer une valeur d'un déphasage qui existe entre les radiations d'émission telles que produites par deux des voies d'émission du radar, appelé déphasage d'émission pour ces deux voies d'émission, à partir d'une différence entre les valeurs des déphasages d'émission-réception qui ont été déterminées à l'étape /2/ séparément pour chacune des modulations de ces deux voies d'émission.

Ainsi, les modulations orthogonales qui sont affectées respectivement aux voies d'émission du radar permettent d'identifier dans le signal de retour, des composantes qui résultent une-à-une des radiations d'émission produites par les voies d'émission. Le déphasage d'émission-réception qui est déterminé à l'étape /2/ pour chaque voie d'émission comporte alors deux contributions : une contribution contrôlée à but de formation de faisceaux, ou «beam forming» en anglais, et une contribution involontaire qui peut varier en fonction de la voie d'émission considérée. Alors en comparant les déphasages d'émission-réception qui sont déterminés pour deux voies d'émission différentes, et en soustrayant éventuellement les contributions contrôlées, l'invention permet de déterminer des différences entre les contributions involontaires de déphasages qui sont relatives aux voies d'émission prises par paires. Ces différences sont appelées déphasages d'émission.

Le signal de retour peut être provoqué à partir des radiations d'émission par n'importe quel élément de scène qui se trouve dans le champ d'émission du radar et qui réfléchit les radiations d'émission. Il n'est donc pas nécessaire d'utiliser un réflecteur qui soit dédié à une séquence de test appliquée au radar. Il n'est pas nécessaire non plus que des conditions particulières d'utilisation du radar soient compatibles avec une séquence de test. Autrement dit, le procédé de l'invention qui regroupe les étapes /1/ à /3/ peut être appliqué lors d'une utilisation de mission du radar, quelle qu'elle soit. Il peut notamment être exécuté lors d'une séquence de fonctionnement du radar destinée à rechercher une cible à l'intérieur d'un champ de surveillance, dès lors qu'au moins un écho est détecté en réponse à chaque faisceau d'émission. Il peut aussi être exécuté lors d'une séquence de fonctionnement de mission quelconque du radar, telle que par exemple une séquence à fonction de surveillance d'un secteur ou une séquence qui est destinée à suivre le déplacement ou l'évolution d'un objet.

Les étapes /1/ à /3/ peuvent être répétées lors de plusieurs séquences successives de fonctionnement du radar, et la valeur de chaque déphasage d'émission peut être mise à jour à l'issue de chaque répétition de l'étape /3/.

Il est aussi possible en répétant les étapes /1/ à /3/ de suivre des variations qui surviendraient pour chaque déphasage d'émission. De telles variations peuvent signifier une altération - vieillissement ou dysfonctionnement - de certains composants d'émission du radar. Sur la base d'un tel suivi de valeurs, il est alors possible de programmer une opération de maintenance du radar lorsqu'un au moins des déphasages d'émission révèle une variation trop importante. Eventuellement, une étude statistique d'évolution peut être effectuée pour chaque déphasage d'émission, à partir des valeurs déterminées pour ce déphasage d'émission lors des séquences successives de fonctionnement du radar. Dans ce cas, une opération de maintenance du radar peut être programmée si au moins un résultat de l'étude statistique, par exemple une valeur moyenne ou un écart-type, est supérieur à un seuil de dérive prédéterminé.

Préférablement, l'étape /2/ peut inclure pour chaque modulation de soustraire à la valeur du déphasage d'émission-réception correspondant la contribution contrôlée de formation de faisceau qui a été utilisée lors de l'exécution de l'étape /1/. Cette contribution contrôlée concerne l'émission et la réception. La soustraction est effectuée avant l'étape /3/. De cette façon, les valeurs des déphasages d'émission-réception et celles des déphasages d'émission qui sont obtenues lors de répétitions de la séquence des étapes /1/ à /3/ sont cohérentes entre elles, même si la direction d'émission du radar a varié entre certaines de ces séquences. Il est ainsi possible de calculer la moyenne des valeurs successives du déphasage d'émission obtenues pour chacune des voies, sans imposer que la direction d'émission du radar soit constante. Le procédé de l'invention peut ainsi encore mieux être appliqué pendant une utilisation de mission du radar, sans perturber la mission.

Possiblement, le procédé de l'invention peut comprendre en outre l'étape suivante :
/4/ ajuster, de préférence numériquement, une valeur d'un décalage de phase («phase offset» en anglais) de l'une au moins des deux voies d'émission, cette valeur de décalage de phase affectant la radiation d'émission qui est produite par la voie d'émission lors d'au moins une exécution ultérieure de l'étape /1/, de sorte que la valeur du déphasage d'émission qui existe entre les deux voies d'émission lors de l'exécution ultérieure de l'étape /1/ coïncide avec une valeur-cible de formation de faisceau, correspondant à la direction et la forme de faisceau d'émission voulues.

Ainsi, les déphasages d'émission qui existent entre certaines au moins des voies d'émission du radar peuvent être compensés par des décalages de phases ajustables et disponibles pour ces voies d'émission. Après de telles compensations des déphasages d'émission, la direction d'émission du radar et la forme du faisceau d'émission correspondent avec plus d'exactitude aux direction et forme voulues, et contrôlées par les déphasages de formation de faisceau.

Le procédé de l'invention peut éventuellement être complété avec une étape de détermination et/ou de compensation des écarts d'amplitudes d'émission qui peuvent affecter des voies d'émission différentes du radar. Dans ce but, pour chaque modulation à l'étape /2/, une valeur d'un quotient d'amplitudes, entre la composante du signal de retour qui a été isolée conformément à cette modulation et la radiation d'émission qui a été produite et modulée conformément à la même modulation, peut être déterminée. Alors, cette valeur de quotient d'amplitudes peut être stockée pour la modulation concernée, notamment pour être utilisée dans un facteur de correction d'amplitude à appliquer à la voie d'émission qui correspond à cette modulation. Eventuellement, pour cette voie d'émission, le déphasage d'émission et le quotient d'amplitudes entre composante du signal de retour et radiation d'émission peuvent être compensés simultanément à l'étape /4/.

Pour augmenter la fiabilité de la compensation d'amplitude de chaque voie d'émission, il est possible de calculer, pour chaque modulation, une moyenne du quotient d'amplitudes à partir des valeurs du quotient d'amplitudes qui ont été déterminées préalablement pour cette modulation à chacune de plusieurs répétitions de la séquence des étapes /1/ à /3/. Alors, pour chaque modulation, la moyenne du quotient d'amplitudes peut être utilisée en tant que facteur de correction d'amplitude qui est appliqué à la voie d'émission correspondant à cette modulation, pour que ce facteur de correction d'amplitude soit effectif lors d'au moins une séquence de fonctionnement ultérieure du radar.

Enfin, de façon générale pour l'invention, il est possible, bien qu'optionnel, de ne déterminer la valeur du déphasage d'émission-réception à l'étape /2/ pour chaque modulation que si l'une au moins des trois conditions suivantes est satisfaite :
- la composante du signal de retour qui a été isolée conformément à cette modulation possède une intensité supérieure ou égale à un seuil d'intensité prédéterminé ;
- la composante du signal de retour qui a été isolée conformément à cette modulation présente, par rapport à la radiation d'émission qui a été modulée selon la même modulation, un décalage fréquentiel, notamment par effet Doppler, qui est nul, ou inférieur ou égal à un seuil de décalage fréquentiel prédéterminé, ou supérieur ou égal à un seuil de décalage fréquentiel prédéterminé, ou encore à l'intérieur d'un intervalle prédéterminé de décalage fréquentiel ; et
- la composante du signal de retour qui a été isolée conformément à cette modulation présente, par rapport à la radiation d'émission qui a été modulée selon la même modulation, des fluctuations de phase qui sont inférieures ou égales à un seuil de fluctuation de phase prédéterminé.

Par ailleurs, un second aspect de l'invention propose un radar qui comprend :
- au moins deux voies d'émission juxtaposées, qui sont adaptées pour produire des radiations d'émission respectives à chaque séquence de fonctionnement du radar ;
- au moins une voie de réception, qui est adaptée pour détecter un signal de retour à chaque séquence de fonctionnement du radar ;
- des modulateurs, agencés pour moduler la radiation d'émission qui est produite par chaque voie d'émission conformément à une modulation qui est affectée à cette voie d'émission, et qui est orthogonale à la modulation qui est affectée à chaque autre des voies d'émission ;
- un ensemble de filtrage, agencé pour filtrer le signal de retour conformément à chaque modulation, afin d'isoler une composante du signal de retour qui possède cette modulation ; et
- une unité de calibration, qui est adaptée pour mettre en œuvre un procédé conforme au premier aspect de l'invention, y compris ses perfectionnements et prolongements éventuels qui ont été cités plus haut.

D'autres particularités et avantages de la présente invention apparaîtront dans la description ci-après d'exemples de mise en œuvre non limitatifs, en référence aux dessins annexés, dans lesquels :
- la figure 1 est une vue en perspective d'une antenne-réseau de radar MIMO auquel l'invention peut être appliquée ;
- la figure 2 est un diagramme montrant des voies d'émission et de réception d'un radar conforme à la figure 1 ; et
- la figure 3 détaille des opérations effectuées au sein d'une unité de calibration qui est utilisée pour mettre en œuvre l'invention.

Des références identiques qui sont indiquées dans des figures différentes désignent des éléments identiques ou qui ont des fonctions identiques.

En outre, pour raison de clarté, des composants de radar qui sont connus de l'Homme du métier et qui ne sont pas directement concernés ou modifiés par l'invention ne sont pas décrits.

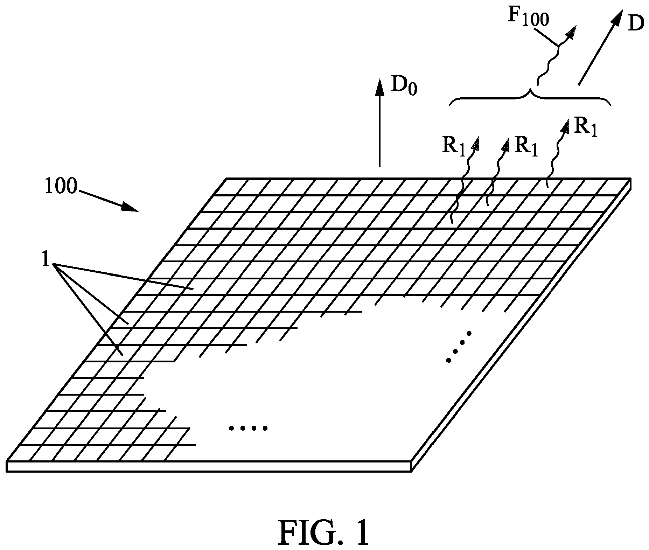

Conformément à la figure 1, un radar de type MIMO possède une antenne-réseau 100. Une telle antenne est constituée par un ensemble d'éléments rayonnants 1 qui sont juxtaposés selon un agencement matriciel à l'intérieur d'un plan commun, par exemple aux intersections de 16 lignes et 16 colonnes, ou de 32 lignes et 8 colonnes, de façon non-limitative. D₀ désigne la direction perpendiculaire au plan de l'antenne-réseau 100. Un signal radioélectrique à émettre par l'antenne 100 est transmis à chaque élément rayonnant 1 avec un déphasage qui dépend de la position de cet élément rayonnant dans la matrice et de l'inclinaison qui est voulue pour la direction d'émission D par rapport à la direction D₀. Le regroupement des radiations d'émission qui sont produites individuellement par tous les éléments rayonnants 1, notées R₁, constitue le faisceau d'émission de l'antenne 100, noté F₁₀₀, et ce faisceau possède la direction d'émission D qui est déterminée par les déphasages relatifs des éléments rayonnants 1. De façon connue de l'Homme du métier, un principe similaire est appliqué pour un fonctionnement en réception de l'antenne-réseau 100, pour détecter un rayonnement qui est incident selon la direction D. En émission aussi bien qu'en réception, les déphasages qui sont appliqués aux éléments rayonnants 1 permettent aussi d'ajuster, en plus de la direction D, la forme du faisceau d'émission ou du faisceau de rayonnement qui est détecté.

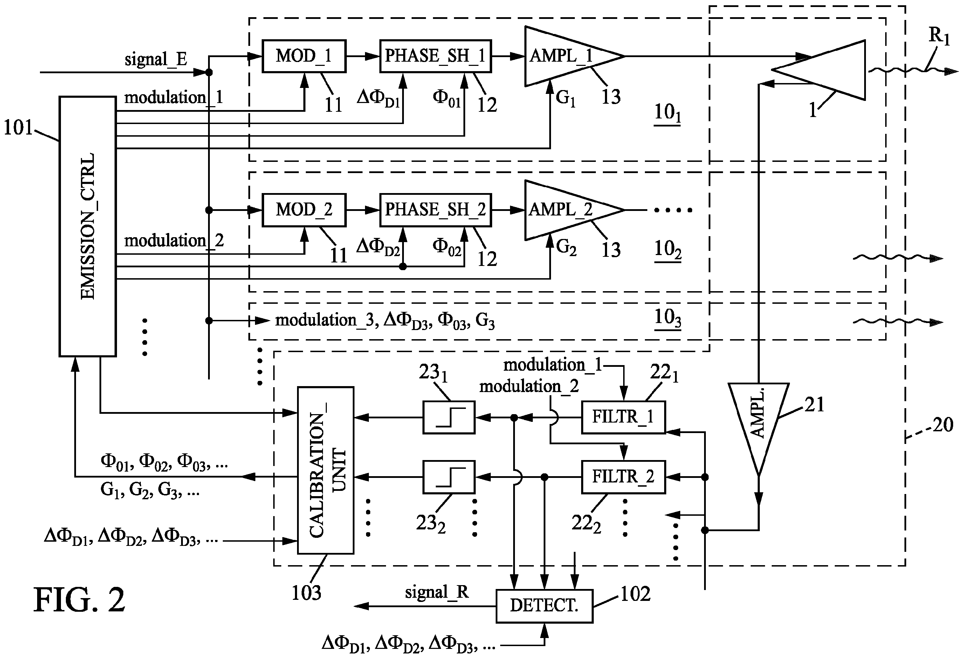

Au sein du radar, chaque élément rayonnant 1 est partie d'une voie d'émission qui est distincte de celle de chaque autre élément rayonnant. Les références 10₁, 10₂, 10₃,... désignent différentes voies d'émission qui sont agencées en parallèles. En outre, dans le mode de réalisation particulier qui est représenté sur la figure 2, chaque élément rayonnant 1 est aussi partie d'une voie de réception 20 qui est distincte de celle de chaque autre élément rayonnant. Pour raison de clarté de cette figure, seule la voie d'émission 10₁ est détaillée complètement, et une seule voie de réception 20 est représentée, mais il est entendu que chaque élément rayonnant 1 de l'antenne-réseau 100 appartient à une voie d'émission distincte et à une voie de réception distincte. Toutefois, dans d'autres modes de réalisation aussi possibles, les éléments récepteurs de rayonnement des voies de réception peuvent être des composants qui sont distincts des éléments rayonnants des voies d'émission. Toutes les voies d'émission 10₁, 10₂, 10₃,... sont connectées en entrée pour être alimentées simultanément et en parallèle avec un signal à émettre noté signal_E. Par ailleurs, toutes les voies de réception 20 sont connectées à une entrée d'un détecteur commun 102, noté DETECT., qui délivre en sortie le signal reçu par l'antenne 100, noté signal_R.

De façon connue, chaque voie d'émission 10₁, 10₂, 10₃,... comprend selon un agencement en série : un modulateur 11, noté MOD_1 pour la voie d'émission 10₁, MOD_2 pour la voie d'émission 10₂,..., un déphaseur 12, noté PHASE_SH_1 pour la voie d'émission 10₁, PHASE_SH_2 pour la voie d'émission 10₂,...un amplificateur 13, noté AMPL_1 pour la voie d'émission 10₁, AMPL_2 pour la voie d'émission 10₂,..., et l'élément rayonnant 1 de cette voie d'émission. En outre, au sein de chaque voie d'émission 10₁, 10₂,..., le déphaseur 12 est connecté à une sortie d'un contrôleur d'émission 10₁, noté EMISSION_CTRL, pour recevoir une valeur de déphasage à appliquer à la radiation d'émission R₁ de cette voie d'émission. Ce déphasage est noté ΔΦ_{D1} pour la voie d'émission 10₁, ΔΦ_{D2} pour la voie d'émission 10₂, ΔΦ_{D3} pour la voie d'émission 10₃, etc. L'ensemble des déphasages ΔΦ_{D1}, ΔΦ_{D2}, ΔΦ_{D3},... qui sont ainsi transmis aux déphaseurs 12 de toutes les voies d'émission 10₁, 10₂, 10₃,... permettent de contrôler la direction D du faisceau F₁₀₀ et sa forme, comme expliqué plus haut. Enfin, le modulateur 11 de chaque voie d'émission 10₁, 10₂,... est aussi connecté au contrôleur d'émission 10₁, à une autre sortie de celui-ci, pour recevoir la modulation à appliquer à la radiation d'émission R₁ de cette voie d'émission. Ainsi, le modulateur MOD_1 reçoit la modulation modulation_1, le modulateur MOD_2 reçoit la modulation modulation_2, etc. Chaque modulation peut être d'un type quelconque, notamment CDMA, FDMA, TDMA, etc.

Chaque voie de réception 20 comprend, à partir de l'élément rayonnant 1 correspondant : un amplificateur 21, un ensemble de filtres de modulation 22₁, 22₂,..., notés FILTR_1, FILTR_2,... et connectés en parallèle les uns par rapport aux autres au sein de la voie de réception considérée, éventuellement un ou plusieurs filtres à seuil 23₁, 23₂,... connectés un-à-un en série avec les filtres de modulation 22₁, 22₂,..., et une unité de calibration 103 notée CALIBRATION_UNIT. En outre, les sorties des filtres de modulation 22₁, 22₂,... sont connectées au détecteur 102 qui reçoit par ailleurs les déphasages ΔΦ_{D1}, ΔΦ_{D2},... pour sélectionner la direction de réception de l'antenne-réseau 100. Chaque filtre de modulation 22₁, 22₂,... reçoit par ailleurs une des modulations qui sont appliquées aux modulateurs 11 pour réaliser son filtrage conformément à cette modulation. Par exemple, le filtre 22₁ reçoit la modulation modulation_1 qui est mise en œuvre par le modulateur MOD_1, le filtre 22₂ reçoit la modulation modulation_2 qui est mise en œuvre par le modulateur MOD_2, etc. Chacune des modulations commandées par le contrôleur d'émission 101 est ainsi transmise à l'un des filtres de modulation de chaque voie de réception 20. De cette façon, le détecteur 102 et l'unité de calibration 103 reçoivent toutes les composantes du signal de réception signal_R, séparées les unes des autres à l'intérieur de chaque voie de réception 20. Possiblement, l'unité de calibration 103 peut être commune à plusieurs des voies de réception 20, ou à toutes.

Par souci de clarté, on pourra supposer dans un premier temps que les modulations qui sont commandées par le contrôleur d'émission 101 aux modulateurs 11 et aux filtres 22₁, 22₂,... sont toutes différentes et chacune orthogonale à toutes les autres.

Selon le fonctionnement de radar, le signal de réception signal_R est produit par au moins une réflexion du faisceau d'émission F₁₀₀ sur un élément de scène qui est présent à distance de l'antenne 100 dans la direction d'émission D correspondant aux déphasages ΔΦ_{D1}, ΔΦ_{D2}, ΔΦ_{D3},... Pour cela, le signal de réception signal_R a été appelé signal de retour dans la partie générale de la présente description. Eventuellement, plusieurs éléments de scène peuvent être présents simultanément dans la direction d'émission du radar, provoquant plusieurs échos qui sont reçus par le radar avec des retards variables, dus aux différences entre les distances d'éloignement de ces éléments de scène.

Selon l'invention, l'unité de calibration 103 est connectée à une sortie du contrôleur d'émission 101 pour recevoir une référence de phase REF, ou un instant de référence temporelle, qui est relative à l'émission du signal signal_E. L'unité de calibration 103 est alors adaptée pour déterminer, à partir des signaux qui lui sont transmis par tous les filtres 22₁, 22₂,... d'une même des voies de réception 20, un déphasage qui existe entre l'émission par l'un des éléments rayonnants 1 de la radiation modulée correspondante R₁, et la détection de la composante du signal de retour qui comporte la même modulation. Ce déphasage a été appelé déphasage d'émission-réception dans la partie générale de la présente description, et est noté ΔΦ₀₁ pour la modulation modulation_1, ΔΦ₀₂ pour la modulation modulation_2, ΔΦ₀₃ pour la modulation modulation_3, etc. Un tel déphasage d'émission-réception existe ainsi séparément pour chaque voie d'émission 10₁, 10₂, 10₃..., en association avec celui des filtres 22₁, 22₂,... dans la voie de réception 20 utilisée qui reçoit la même modulation que cette voie d'émission. En outre, pour une même des voies d'émission 10₁, 10₂, 10₃,..., son déphasage d'émission-réception ΔΦ₀₁, ΔΦ₀₂, ΔΦ₀₃,... peut être déterminé autant de fois que le nombre de voies de réception 20 qui aboutissent à l'unité de calibration 103. Une telle redondance ne sera plus évoquée par la suite.

Les filtres à seuil 23₁, 23₂,... , optionnels, peuvent contribuer à la fiabilité des valeurs qui sont déterminées pour les déphasages d'émission-réception ΔΦ₀₁, ΔΦ₀₂,... en supprimant celles des composantes filtrées du signal de retour signal_R dont les intensités sont trop faibles, ou celles qui présentent un décalage fréquentiel par rapport au signal d'émission signal_E, révélant que l'élément de scène qui est à l'origine de la réflexion est mobile. Pour cela, un seuil d'intensité et/ou une borne inférieure de décalage fréquentiel et/ou une borne supérieure de décalage fréquentiel peut (peuvent) être appliqué(s) au sein des filtres à seuil 23₁, 23₂,.... De façon similaire, une composante filtrée du signal de retour peut être rejetée pour déterminer un déphasage d'émission-réception lorsqu'elle présente des fluctuations de phase qui sont trop importantes.

L'unité de calibration 103 peut ainsi déterminer, pour chacune des paires de voies d'émission, ou pour une sélection restreinte de ces paires, par exemple pour la paire des voies d'émission 10₁ et 10₂ ou la paire des voies d'émission 10₁ et 10₃, une différence entre les deux déphasages d'émission-réception qui sont relatifs individuellement à chaque voie d'émission 10 de cette paire. Alors, en prenant arbitrairement une des voies d'émission comme référence pour toutes les autres voies d'émission, chacune de ces différences est un déphasage d'émission qui est relatif à la voie d'émission autre que la voie d'émission de référence. Ainsi, l'unité de calibration 103 détermine une valeur de déphasage d'émission à partir de la composante du signal de retour qui est issue de chacun des filtres de modulation 22₁, 22₂,.... Cette valeur est le déphasage d'émission de celle des voies d'émission qui met en œuvre la même modulation que le filtre de modulation considéré, en négligeant une contribution de déphasage du filtre lui-même. L'opération de différence entre deux déphasages d'émission-réception garantit que le déphasage d'émission qui est déterminé pour chaque voie d'émission est indépendant de la distance d'éloignement par rapport à l'antenne 100, de l'élément de scène réfléchissant qui est à l'origine du signal de retour.

Ainsi, lorsque la voie d'émission 10₁ est prise pour référence, la valeur de déphasage d'émission de la voie d'émission 10₂ est Φ₀₂ = ΔΦ₀₂ - ΔΦ₀₁, la valeur de déphasage d'émission de la voie d'émission 10₃ est Φ₀₃ = ΔΦ₀₃ - ΔΦ₀₁, etc. Du fait que la voie d'émission 10₁ soit utilisée comme référence : Φ₀₁ = 0.

Ces valeurs de déphasage d'émission Φ₀₂, Φ₀₃,... relatives une-à-une aux voies d'émission 10₂, 10₃,... peuvent être transmises par l'unité de calibration 103 au contrôleur d'émission 10₁, afin que ce dernier commande d'appliquer une correction égale à -Φ₀₂, -Φ₀₃,... au déphasage de formation de faisceau ΔΦ_{D} qui est transmis à la voie d'émission correspondante. De cette façon, la direction du faisceau F₁₀₀ et sa forme peuvent être contrôlées avec plus d'exactitude. Alternativement ou en combinaison, les valeurs des déphasage d'émission Φ₀₂, Φ₀₃,... peuvent être transmises au détecteur 102 pour être prises en compte lors de la reconstitution du signal de réception signal_R.

Au sein de l'unité de calibration 103, l'instant ou la phase qui correspond à la détection de chaque composante du signal de retour, peut être déterminé(e) de différentes manières. En particulier, il peut être déterminé comme une valeur d'horloge ou une valeur de phase qui correspond à un maximum d'amplitude instantanée de cette composante du signal de retour. Toutefois, d'autres critères peuvent être appliqués alternativement pour déterminer l'instant ou la phase qui correspond à la détection de chaque composante du signal de retour. De tels autres critères peuvent porter notamment sur un contraste maximal qui existe entre le signal de retour et un bruit de fond détecté entre des instants de détection qui sont différents, ou sur une stabilité en fréquence ou en phase de chaque composante du signal de retour, qui est maximale à l'instant sélectionné comme instant de réception pour cette composante, par exemple. Pour ne pas introduire de biais entre les valeurs qui sont déterminées pour des déphasages différents d'émission-réception, ces valeurs sont déterminées par rapport à des étapes de traitement de signal qui sont fixes au sein de l'unité de calibration 103, et qui sont identiques ou équivalentes pour toutes les composantes filtrées du signal de retour.

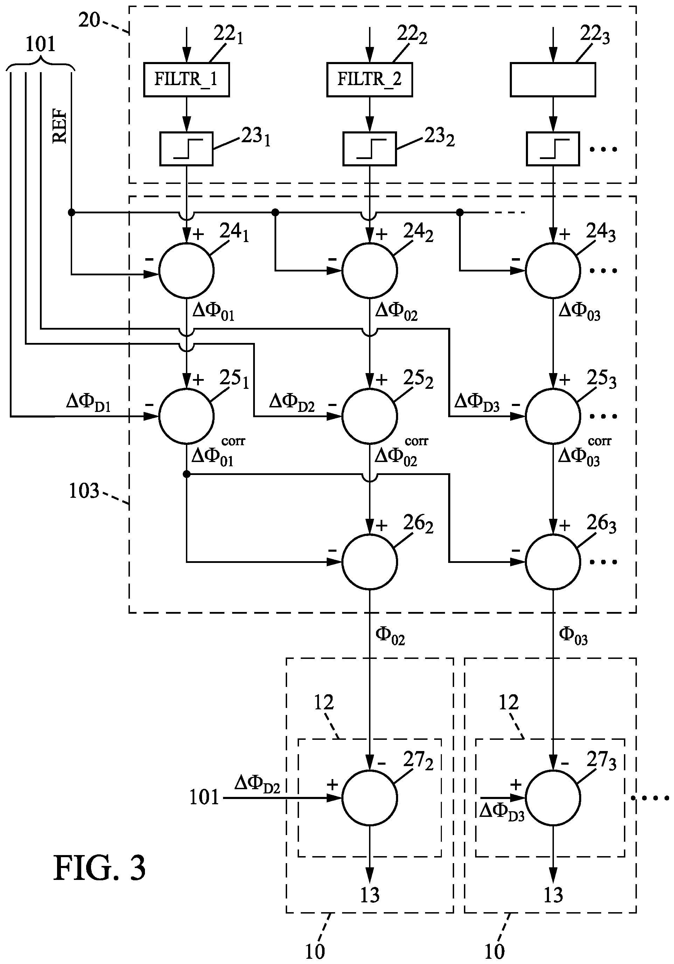

La figure 3 illustre l'enchaînement des opérations effectuées selon l'invention au sein de l'unité de calibration 103 et des déphaseurs d'émission 12. La première étape, symbolisée par des opérateurs 24₁, 24₂, 24₃,..., consiste à obtenir la différence de phase entre la composante de signal qui est délivrée par chacun des filtres de modulation 22₁, 22₂, 22₃,... d'une même voie de réception 20 d'une part, et d'autre part la référence de phase REF qui est délivrée par le contrôleur d'émission 101. Les opérateurs 24₁, 24₂, 24₃,... délivrent ainsi en sortie les déphasages d'émission-réception ΔΦ₀₁, ΔΦ₀₂, ΔΦ_{D3},... relatifs un-à-une aux voies d'émission 10₁, 10₂, 10₃,.... La deuxième étape, symbolisée par des opérateurs 25₁, 25₂, 25₃,..., consiste à retrancher pour chaque voie d'émission 10₁, 10₂, 10₃,..., c'est-à-dire pour chaque modulation, le déphasage de formation de faisceau ΔΦ_{D1}, ΔΦ_{D2}, ΔΦ_{D3},... qui est appliqué par cette voie d'émission. Des valeurs de déphasages d'émission-réception corrigées des contributions volontaires de formation de faisceau sont ainsi obtenues, notées ΔΦ₀₁^{corr}, ΔΦ₀₂^{corr}, ΔΦ₀₃^{corr},... Enfin, la troisième étape, symbolisée par des opérateurs 26₂, 26₃,..., consiste à retrancher la valeur de déphasage d'émission-réception corrigée qui a été obtenue pour l'une des voies d'émission prise comme référence, par exemple la valeur ΔΦ₀₁^{corr} délivrée par l'opérateur 25₁, à chacune des valeurs des déphasages d'émission-réception corrigées ΔΦ₀₂^{corr}, ΔΦ₀₃^{corr},... qui ont été obtenues pour les autres voies d'émission 10₂, 10₃,... Ainsi, les valeurs de déphasage d'émission Φ₀₂, Φ₀₃,... relatives à chacune de ces autres voies d'émission 10₂, 10₃,... sont obtenues. Chaque opérateur 27₂, 27₃,... représente symboliquement la compensation des déphasages d'émission Φ₀₂, Φ₀₃,... qui peut être effectuée pour chacune de ces dernières voies d'émission 10₂, 10₃,... au sein du contrôleur d'émission 101 ou séparément dans chaque déphaseur d'émission 12, pour les séquences de fonctionnement ultérieures du radar. Pour cela, la valeur de déphasage d'émission Φ₀₂, Φ₀₃,... qui a été déterminée pour chaque voie d'émission 10₂, 10₃,... peut être retranchée des valeurs ultérieures du déphasage de formation de faisceau ΔΦ_{D2}, ΔΦ_{D3},... qui sont appliquées par le déphaseur 12 de cette voie d'émission.

Comme déjà mentionné, le procédé qui vient d'être décrit ne nécessite pas qu'une séquence particulière de fonctionnement soit mise en œuvre pour le radar, ni que des conditions particulières d'environnement soient produites. Autrement dit, il peut être appliqué lors de séquences de fonctionnement utiles, aussi désignées par séquences de fonctionnement de mission du radar. Il est alors possible de recueillir à chaque nouvelle séquence de fonctionnement du radar, une nouvelle valeur pour le déphasage d'émission de chaque voie d'émission. La valeur du déphasage d'émission qui est transmise au déphaseur 12 de chaque voie d'émission 10 pour compensation peut être actualisée après chaque nouvelle séquence de fonctionnement du radar, ou après un nombre prédéterminé de séquences de fonctionnement. Il est aussi possible de suivre dans le temps une évolution temporelle des valeurs obtenues successivement pour un même déphasage d'émission, ce qui peut révéler un vieillissement progressif ou un dysfonctionnement de la voie d'émission correspondante. L'utilisation d'un seuil de dérive pour chaque déphasage d'émission, par rapport à une valeur initiale obtenue à une date de référence pour ce déphasage d'émission, ou l'utilisation d'un seuil d'écart-type pour les suites de valeurs obtenues pour chaque déphasage d'émission, peut permettre de déclencher une opération de maintenance du radar.

Alternativement ou en combinaison, la valeur de déphasage d'émission qui est transmise par l'unité de calibration 103 au contrôleur d'émission 101 peut être une valeur moyenne d'un nombre déterminé de valeurs de déphasage d'émission qui ont été obtenues successivement pour une même voie d'émission. Cette valeur moyenne est alors retranchée par le contrôleur d'émission 101 ou le déphaseur 12 au déphasage qui est appliqué à la voie d'émission concernée 10 pour ajuster la direction d'émission D et la forme du faisceau F₁₀₀. Chaque valeur moyenne peut être calculée sur un ensemble glissant de valeurs qui ont été obtenues successivement, ou bien calculée sur des ensembles disjoints de valeurs obtenues successivement.

Toutefois, le procédé de l'invention peut être mis en œuvre lors de séquences de fonctionnement dédiées, par exemple des séquences dédiées à la calibration des voies d'émission. Alors, un réflecteur spécifique peut être utilisé, à disposer devant l'antenne-réseau 100, et qui peut permettre d'améliorer un rapport signal-sur-bruit qui est effectif lors de la détection du signal de retour pour les séquences de calibration. Alternativement, le procédé de l'invention peut aussi être mis en œuvre en connectant électriquement les sorties des déphaseurs 12 des voies d'émission 10 directement sur les entrées de tous les filtres de modulation 22₁, 22₂,... de la voie de réception 20 qui est utilisée pour mettre en œuvre l'invention.

En plus du déphasage d'émission qui peut affecter involontairement chaque voie d'émission 10 indépendamment des autres voies d'émission, et que l'invention permet de compenser comme cela vient d'être décrit, il est possible que les voies d'émission 10 produisent les radiations d'émission R₁ avec des intensités qui diffèrent d'une voie d'émission à l'autre. De telles variations d'intensité d'émission, entre deux voies d'émission 10 qui sont différentes au sein du radar, peuvent aussi être involontaires et dues de même à une variabilité de fabrication des composants qui entrent dans la constitution des voies d'émission, ou dues à une vitesse de vieillissement de ces composants qui diffère entre des voies d'émission différentes. L'unité de calibration 103 peut alors, optionnellement, déterminer l'amplitude de la composante du signal de retour qui est filtrée par chacun des filtres de modulation 22₁, 22₂,... d'une même voie de réception 20. Elle calcule ensuite le quotient entre une valeur d'amplitude de la radiation R₁ dont la modulation est celle de la composante considérée du signal de retour, et l'amplitude de cette composante du signal de retour. Ce quotient est noté G₁ pour la modulation modulation_1, G₂ pour la modulation modulation_2, G₃ pour la modulation modulation_3..., et peut être transmis via le contrôleur d'émission 10₁, à l'amplificateur 13 de celle des voies d'émission 10₁, 10₂, 10₃,... qui possède la modulation considérée. Une compensation du défaut d'amplitude est ainsi obtenue pour cette voie d'émission. Ce procédé de compensation d'amplitude peut être effectué en parallèle pour toutes les modulations.

De même que pour chaque valeur de déphasage d'émission, une valeur moyenne peut être calculée, à partir de plusieurs valeurs qui ont été obtenues pour le quotient d'amplitudes d'une même voie d'émission lors de séquences successives de fonctionnement du radar. Il peut s'agir encore de moyennes glissantes qui sont calculées sur un nombre constant de valeurs obtenues successivement, ou de moyennes calculées sur des ensembles disjoints de valeurs obtenues successivement. Alors ces valeurs moyennes peuvent être transmises à l'amplificateur 13 de la voie d'émission concernée en tant que facteur de correction d'amplitude de la radiation d'émission R₁ qui est produite par cette voie d'émission. De façon connue, pour la fonction de contrôle de la forme du faisceau d'émission F₁₀₀, les amplificateurs 13 de toutes les voies d'émission n'ont pas nominalement des facteurs d'amplification qui sont identiques. Pour chaque voie d'émission, le quotient d'amplitudes est mis en œuvre pour corriger le facteur d'amplification nominal pour la voie d'émission considérée.

Il est entendu que l'invention peut être reproduite en modifiant des aspects secondaires de celle-ci par rapport aux modes de réalisation qui viennent d'être décrits en détail ci-dessus. En particulier, l'antenne-réseau peut avoir des dimensions quelconques, en termes de nombres de lignes et de colonnes. En outre, le radar peut être aussi bien de type monostatique ou bistatique, c'est-à-dire que la voie de réception qui est utilisée pour mettre en œuvre l'invention peut être située au même endroit que les voies d'émission, ou être située à un endroit qui est distant de celles-ci.

Par ailleurs, il est possible d'appliquer l'invention en regroupant les voies d'émission par sous-ensembles disjoints de plusieurs d'entre elles. Un tel nouveau mode de réalisation peut être déduit de la description détaillée qui a été fournie en remplaçant chaque voie d'émission individuelle par un sous-ensemble de plusieurs voies d'émission. Alors, une même modulation est commune à toutes les voies d'émission d'un même sous-ensemble, et orthogonale à la modulation de chaque autre sous-ensemble.

## Revendications

1. Procédé de détermination d'au moins un déphasage d'émission d'un radar qui comprend au moins deux voies d'émission (10₁, 10₂, 10₃) juxtaposées et au moins une voie de réception (20), ledit radar étant agencé pour que chaque voie d'émission produise une radiation d'émission (R₁) modulée conformément à une modulation qui est affectée à ladite voie d'émission, et qui est orthogonale à la modulation qui est affectée à chaque autre des voies d'émission, et ledit radar étant agencé pour que, lorsque la voie de réception détecte un signal de retour, ledit signal de retour soit filtré conformément à chaque modulation afin d'isoler une composante du signal de retour qui possède ladite modulation,
le procédé étant **caractérisé en ce qu'**il comprend les étapes suivantes :
/1/ activer les voies d'émission (10₁, 10₂, 10₃) pour produire les radiations d'émission modulées (R₁), et activer la voie de réception (20) pour détecter le signal de retour, puis filtrer ledit signal de retour conformément à chaque modulation ;
/2/ séparément pour chaque modulation : déterminer une valeur d'un déphasage entre émission et réception, appelé déphasage d'émission-réception (ΔΦ₀₁, ΔΦ₀₂, ΔΦ₀₃) pour ladite modulation, qui existe entre la radiation d'émission (R₁) produite et modulée conformément à ladite modulation et la composante du signal de retour qui a été isolée conformément à la même modulation, ledit déphasage d'émission-réception étant déterminé pour des points de passage de signal fixes à l'intérieur du radar pour chaque voie d'émission (10₁, 10₂, 10₃) et pour toutes les composantes du signal de retour ; puis
/3/ déterminer une valeur d'un déphasage qui existe entre les radiations d'émission telles que produites par deux des voies d'émission (10₁, 10₂, 10₃) du radar, appelé déphasage d'émission (Φ₀₂, Φ₀₃) pour lesdites deux voies d'émission, à partir d'une différence entre les valeurs des déphasages d'émission-réception (ΔΦ₀₁, ΔΦ₀₂, ΔΦ₀₃) qui ont été déterminées à l'étape /2/ séparément pour chacune des modulations desdites deux voies d'émission.

2. Procédé selon la revendication 1, comprenant en outre l'étape suivante :
/4/ ajuster, de préférence numériquement, une valeur d'un décalage de phase de l'une au moins des deux voies d'émission (10₁, 10₂, 10₃), ladite valeur de décalage de phase affectant la radiation d'émission (R₁) qui est produite par ladite voie d'émission lors d'au moins une exécution ultérieure de l'étape /1/, de sorte que la valeur du déphasage d'émission (Φ₀₂, Φ₀₃) qui existe entre les deux voies d'émission lors de ladite exécution ultérieure de l'étape /1/ coïncide avec une valeur-cible de formation de faisceau, correspondant à une direction et une forme de faisceau d'émission voulues.

3. Procédé selon la revendication 1 ou 2, exécuté lors d'une utilisation de mission du radar, ladite utilisation de mission comprenant une séquence de fonctionnement du radar destinée à rechercher une cible à l'intérieur d'un champ de surveillance, ou à suivre un déplacement ou une évolution d'une cible.

4. Procédé selon l'une quelconque des revendications précédentes, suivant lequel les étapes /1/ à /3/ sont répétées lors de plusieurs séquences successives de fonctionnement du radar, et la valeur de chaque déphasage d'émission (Φ₀₂, Φ₀₃) est mise à jour à l'issue de chaque répétition de l'étape /3/.

5. Procédé selon la revendication 4, comprenant en outre d'effectuer une étude statistique d'évolution de chaque déphasage d'émission (Φ₀₂, Φ₀₃), à partir des valeurs déterminées pour ledit déphasage d'émission lors des séquences successives de fonctionnement du radar, et suivant lequel une opération de maintenance du radar est programmée si au moins un résultat de l'étude statistique est supérieur à un seuil de dérive prédéterminé.

6. Procédé selon l'une quelconque des revendications précédentes, suivant lequel l'étape /2/ inclut, pour chaque modulation, de soustraire à la valeur du déphasage d'émission-réception (Δ(V₀₁, ΔΦ₀₂, ΔΦ₀₃) une contribution contrôlée de formation de faisceau (ΔΦ₀₁, ΔΦ_{D2}, ΔΦ_{D3}) qui a été utilisée lors de l'exécution de l'étape /1/.

7. Procédé selon l'une quelconque des revendications précédentes, suivant lequel pour chaque modulation, à l'étape /2/, une valeur d'un quotient d'amplitudes (G₁, G₂, G₃), entre la composante du signal de retour qui a été isolée conformément à ladite modulation et la radiation d'émission (R₁) qui a été produite et modulée conformément à la même modulation, est aussi déterminée.

8. Procédé selon la revendication 7, suivant lequel pour chaque modulation, une moyenne du quotient d'amplitudes (G₁, G₂, G₃) est calculée à partir des valeurs du quotient d'amplitudes déterminées pour ladite modulation à chacune de plusieurs répétitions de la séquence des étapes /1/ à /3/,
et suivant lequel, pour chaque modulation, la moyenne du quotient d'amplitudes (G₁, G₂, G₃) est utilisée dans un facteur de correction d'amplitude qui est appliqué à la voie d'émission (10₁, 10₂, 10₃) correspondant à ladite modulation, pour que ledit facteur de correction d'amplitude soit effectif lors d'au moins une séquence de fonctionnement ultérieure du radar.

9. Procédé selon l'une quelconque des revendications précédentes, suivant lequel la valeur du déphasage d'émission-réception (ΔΦ₀₁, ΔΦ₀₂, ΔΦ₀₃) n'est déterminée à l'étape /2/ pour chaque modulation que si l'une au moins des trois conditions suivantes est satisfaite :
- la composante du signal de retour qui a été isolée conformément à ladite modulation possède une intensité supérieure ou égale à un seuil d'intensité prédéterminé ;
- la composante du signal de retour qui a été isolée conformément à ladite modulation présente, par rapport à la radiation d'émission (R₁) qui a été modulée selon ladite modulation, un décalage fréquentiel nul, ou inférieur ou égal à un seuil de décalage fréquentiel prédéterminé, ou supérieur ou égal à un seuil de décalage fréquentiel prédéterminé, ou encore à l'intérieur d'un intervalle prédéterminé de décalage fréquentiel ; et
- la composante du signal de retour qui a été isolée conformément à ladite modulation présente, par rapport à la radiation d'émission (R₁) qui a été modulée selon ladite modulation, des fluctuations de phase inférieures ou égales à un seuil de fluctuation de phase prédéterminé.

10. Radar comprenant :
- au moins deux voies d'émission (10₁, 10₂, 10₃) juxtaposées, et adaptées pour produire des radiations d'émission (R₁) respectives à chaque séquence de fonctionnement du radar ;
- au moins une voie de réception (20), adaptée pour détecter un signal de retour à chaque séquence de fonctionnement du radar ;
- des modulateurs (11), agencés pour moduler la radiation d'émission (R₁) qui est produite par chaque voie d'émission (10₁, 10₂, 10₃) conformément à une modulation qui est affectée à ladite voie d'émission, et qui est orthogonale à la modulation qui est affectée à chaque autre des voies d'émission ;
- un ensemble de filtrage (22₁, 22₂,...), agencé pour filtrer le signal de retour conformément à chaque modulation, afin d'isoler une composante du signal de retour qui possède ladite modulation ; et
- une unité de calibration (103),
le radar étant **caractérisé en ce que** l'unité de calibration (103) est adaptée pour mettre en œuvre un procédé qui est conforme à l'une quelconque des revendications précédentes.

## Patentansprüche

1. Verfahren zur Bestimmung wenigstens einer Sende-Phasenverschiebung eines Radars, welches wenigstens zwei nebeneinander angeordnete Sendekanäle (10₁, 10₂, 10₃) und wenigstens einem Empfangskanal (20) umfasst, wobei das Radar dazu angeordnet wird, dass jeder Sendekanal eine Sendestrahlung (R₁) erzeugt, die entsprechend einer Modulation moduliert wird, die dem Sendekanal zugeordnet ist und die orthogonal zu der Modulation ist, die jedem anderen der Sendekanäle zugeordnet wird, und wobei das Radar derart angeordnet wird, dass, wenn der Empfangskanal ein Rücklaufsignal erfasst, das Rücklaufsignal entsprechend jeder Modulation gefiltert wird, um eine Komponente des Rücklaufsignals zu isolieren, die diese Modulation aufweist,
wobei das Verfahren **dadurch gekennzeichnet ist, dass** es die folgenden Schritte umfasst:
/1/ Aktivieren der Sendekanäle (10₁, 10₂, 10₃), um die modulierte Sendestrahlung (R₁) zu erzeugen, und Aktivieren des Empfangskanals (20), um das Rücklaufsignal zu erfassen, dann Filtern des Rücklaufsignals entsprechend jeder Modulation;
/2/ separat für jede Modulation: Bestimmen eines Wertes einer Phasenverschiebung zwischen Senden und Empfangen, genannt Sende-Empfangs-Phasenverschiebung (ΔΦ₀₁, ΔΦ₀₂, ΔΦ₀₃) für die genannte Modulation, die zwischen der entsprechend der genannten Modulation erzeugten und modulierten Sendestrahlung (R₁) und der entsprechend derselben Modulation isolierten Komponente des Rücklaufsignals besteht, wobei die genannte Sende-Empfangs-Phasenverschiebung für feste Signallaufpunkte innerhalb des Radars für jeden Sendekanal (10₁, 10₂, 10₃) und für alle Komponenten des Rücklaufsignals bestimmt wird; und dann:
/3/ Bestimmen eines Wertes einer Phasenverschiebung, die zwischen den Sendestrahlungen existiert, wie sie von zwei der Sendekanäle (10₁, 10₂, 10₃) des Radars erzeugt werden, genannt Sende-Phasenverschiebung (Φ₀₂, Φ₀₃) für die zwei Sendekanäle, aus einer Differenz zwischen den Werten der Sende-Empfangs-Phasenverschiebungen (ΔΦ₀₁, ΔΦ₀₂, ΔΦ₀₃), die in Schritt /2/ separat für jede der Modulationen der zwei Sendekanäle bestimmt worden sind.

2. Verfahren nach Anspruch 1, welches ferner den folgenden Schritt umfasst:
/4/ Einstellen, vorzugsweise numerisch, eines Wertes einer Phasenverschiebung wenigstens eines der beiden Sendekanäle (10₁, 10₂, 10₃), wobei der Phasenverschiebungswert die Sendestrahlung (R₁) beeinflusst, die von dem Emissionskanal bei wenigstens einer nachfolgenden Ausführung von Schritt /1/ erzeugt wird, so dass der Wert der zwischen den beiden Emissionskanälen bestehenden Sende-Phasenverschiebung (Φ₀₂, Φ₀₃) bei der anschließenden Ausführung des Schrittes /1/ mit einem Strahlbildungszielwert übereinstimmt, der einer gewünschten Richtung und Form des Sendestrahls entspricht.

3. Verfahren nach Anspruch 1 oder 2, welches in einem Missionseinsatz des Radars ausgeführt wird, wobei der Missionseinsatz eine Betriebssequenz des Radars zur Suche nach einem Ziel innerhalb eines Überwachungsfeldes oder zur Verfolgung einer Bewegung oder einer Entwicklung eines Ziels umfasst.

4. Verfahren nach einem der vorhergehenden Ansprüche, bei dem die Schritte /1/ bis /3/ während mehrerer aufeinanderfolgenden Sequenzen des Radarbetriebs wiederholt werden, und der Wert jeder Sende-Phasenverschiebung (Φ₀₂, Φ₀₃) am Ende jeder Wiederholung von Schritt /3/ aktualisiert wird.

5. Verfahren nach Anspruch 4, ferner umfassend das Durchführen einer statistischen Untersuchung der Entwicklung jeder Sende-Phasenverschiebung (Φ₀₂, Φ₀₃) aus den Werten, die für die Sende-Phasenverschiebung in aufeinanderfolgenden Betriebssequenzen des Radars bestimmt wurden, und wobei ein Wartungsbetrieb des Radars geplant wird, wenn wenigstens ein Ergebnis der statistischen Untersuchung größer als ein vorbestimmter Ableitungsschwellenwert ist.

6. Verfahren nach einem der vorhergehenden Ansprüche, wobei Schritt /2/ für jede Modulation das Subtrahieren eines gesteuerten Strahlbildungsbeitrags (ΔΦ_{D1}, ΔΦ_{D2}, ΔΦ_{D3}), der bei der Ausführung von Schritt /1/ verwendet wurde, von dem Wert der Sende-Empfangs-Phasenverschiebung (ΔΦ₀₁, ΔΦ₀₂, ΔΦ₀₃) umfasst.

7. Verfahren nach einem der vorhergehenden Ansprüche, wobei für jede Modulation in Schritt /2/ auch ein Wert eines Quotienten von Amplituden (G₁, G₂, G₃) zwischen der Komponente des Rücklaufsignals, die entsprechend der genannten Modulation isoliert wurde, und der Sendestrahlung (R₁), die entsprechend der gleichen Modulation erzeugt und moduliert wurde, bestimmt wird.

8. Verfahren nach Anspruch 7, wobei für jede Modulation ein Mittelwert des Quotienten der Amplituden (G₁, G₂, G₃) aus den Werten des Quotienten der Amplituden berechnet wird, die für die genannte Modulation bei jeder von mehreren Wiederholungen der Folge der Schritte /1/ bis /3/ bestimmt wurden,
und wobei für jede Modulation der Mittelwert des Quotienten der Amplituden (G₁, G₂, G₃) in einem Amplitudenkorrekturfaktor verwendet wird, der auf den Sendekanal (10₁, 10₂, 10₃) angewendet wird, der der genannten Modulation entspricht, so dass der genannte Amplitudenkorrekturfaktor in wenigstens einer nachfolgenden Betriebssequenz des Radars wirksam ist.

9. Verfahren nach einem der vorhergehenden Ansprüche, wobei der Wert der Sende-Empfangs-Phasenverschiebung (ΔΦ₀₁, ΔΦ₀₂, ΔΦ₀₃) in Schritt /2/ für jede Modulation nur bestimmt wird, wenn wenigstens eine der folgenden drei Bedingungen erfüllt ist:
- die Komponente des Rücklaufsignals, die entsprechend der Modulation isoliert wurde, weist eine Stärke auf, die größer gleich einer vorbestimmten Intensitätsschwelle ist;
- die Komponente des Rücklaufsignals, die entsprechend der Modulation isoliert wurde, weist in Bezug auf die Sendestrahlung (R₁), die entsprechend der Modulation moduliert wurde, eine Frequenzverschiebung von Null oder von kleiner gleich bzw. größer gleich einem vorbestimmten Frequenzversatz-Schwellenwert auf, oder diese liegt innerhalb eines vorbestimmten Frequenzversatz-Intervalls; und
- die Komponente des Rücklaufsignals, die entsprechend der Modulation isoliert wurde, weist in Bezug auf die Sendestrahlung (R₁), die gemäß der Modulation moduliert wurde, Phasenschwankungen auf, die kleiner gleich einer vorbestimmten Phasenschwankungsschwelle sind.

10. Radargerät, welches umfasst:
- wenigstens zwei nebeneinander liegende Sendekanäle (10₁, 10₂, 10₃), die dazu ausgebildet sind, bei jeder Betriebssequenz des Radars entsprechende Sendestrahlungen (R₁) zu erzeugen;
- wenigstens einen Empfangskanal (20), der dazu ausgebildet ist, bei jeder Sequenz des Radarbetriebs ein Rücklaufsignal zu erfassen;
- Modulatoren (11), die dazu angeordnet sind, die von jedem Sendekanal (10₁, 10₂, 10₃) erzeugte Übertragungsstrahlung (R₁) entsprechend einer Modulation zu modulieren, die dem Übertragungskanal zugeordnet ist und die orthogonal zu der jedem anderen der Übertragungskanäle zugeordneten Modulation ist;
- eine Filterbaugruppe (22₁, 22₂, ...), die dazu angeordnet ist, das Rücklaufsignal entsprechend jeder Modulation zu filtern, um eine Komponente des Rücklaufsignals zu isolieren, die die genannte Modulation aufweist; und
- eine Kalibrierungseinheit (103),
wobei das Radargerät **dadurch gekennzeichnet ist, dass** die Kalibrierungseinheit (103) dazu ausgebildet ist, ein Verfahren auszuführen, welches einem der vorhergehenden Ansprüche entspricht.

## Claims

1. Method for determining at least one transmission phase difference of a radar that comprises at least two juxtaposed transmission channels (10₁, 102, 10₃) and at least one reception channel (20), said radar being arranged so that each transmission channel produces a transmission radiation (R₁) modulated in accordance with a modulation that is allocated to said transmission channel, and which is orthogonal to the modulation that is allocated to each other one of the transmission channels, and said radar being arranged so that, when the reception channel detects a return signal, said return signal is filtered in accordance with each modulation in order to isolate a component of the return signal that has said modulation,
the method being **characterised in that** it comprises the following steps:
/1/ activating the transmission channels (10₁, 10₂, 10₃) to produce the modulated transmission radiations (R₁), and activating the reception channel (20) to detect the return signal, and then filtering said return signal in accordance with each modulation;
/2/ separately for each modulation: determining a value of a phase difference between transmission and reception, referred to as transmission-reception phase difference (ΔΦ₀₁, ΔΦ₀₂, ΔΦ₀₃) for said modulation, which exists between the transmission radiation (R₁) produced and modulated in accordance with said modulation and the component of the return signal that was isolated in accordance with the same modulation, said transmission-reception phase difference being determined for signal passage points constant within the radar for each transmission channel (10₁, 10₂, 10₃) and for all the components of the return signal; then
/3/ determining a value of a phase difference that exists between the transmission radiations as produced by two of the transmission channels (10₁, 10₂, 10₃) of the radar, referred to as transmission phase difference (Φ₀₂, Φ₀₃) for said two transmission channels, from a difference between the values of the transmission-reception phase differences (ΔΦ₀₁, ΔΦ₀₂, ΔΦ₀₃) that were determined in step /2/ separately for each of the modulations of said two transmission channels.

2. Method according to claim 1, further comprising the following step:
/4/ adjusting, preferably numerically, a value of a phase shift of at least of the two transmission channels (10₁, 10₂, 10₃), said phase shift value affecting the transmission radiation (R1) that is produced by said transmission channel during at least one subsequent performance of step /1/, so that the transmission phase difference value (Φ₀₂, Φ₀₃) that exists between the two transmission channels during said subsequent implementation of step /1/ coincides with a beam-shaping target value, corresponding to a required transmission-beam direction and shape.

3. Method according to claim 1 or 2, implemented during a task use of the radar, said task use comprising an operation sequence of the radar intended to seek a target within a surveillance field, or to follow a movement or a change in target.

4. Method according to any one of the preceding claims, wherein steps /1/ to /3/ are repeated during a plurality of successive operation sequences of the radar, and the value of each transmission phase difference (Φ₀₂, Φ₀₃) is updated at the end of each repetition of step /3/.

5. Method according to claim 4, further comprising performing a statistical study on the change in each transmission phase difference (Φ₀₂, Φ₀₃), from the values determined for said transmission phase difference during successive operation sequences of the radar, and wherein a maintenance operation on the radar is programmed if at least one result of the statistical study is above a predetermined drift threshold.

6. Method according to any one of the preceding claims, wherein step /2/ includes, for each modulation, subtracting from the value of the transmission-reception phase difference (ΔΦ₀₁, ΔΦ₀₂, ΔΦ₀₃) a controlled beam-shaping contribution (ΔΦ_{D1}, ΔΦ_{D2}, ΔΦ_{D3}) that was used during execution of step /1/.

7. Method according to any one of the preceding claims, wherein, for each modulation, in step /2/, a value of a quotient of amplitudes (G₁, G₂, G₃), between the component of the return signal that was isolated in accordance with said modulation and the transmission radiation (R₁) that was produced and modulated in accordance with the same modulation, is also determined.

8. Method according to claim 7, wherein, for each modulation, an average of the amplitude quotient (G₁, G₂, G₃) is calculated from the values of the quotient of amplitudes determined for said modulation at each of a plurality of repetitions of the sequence of steps /1/ to /3/,
and wherein, for each modulation, the average of the amplitude quotient (G₁, G₂, G₃) is used in an amplitude-correction factor that is applied to the transmission channel (10₁, 10₂, 10₃) corresponding to said modulation, so that said amplitude-correction factor is effective during at least one subsequent operation sequence of the radar.

9. Method according to any one of the preceding claims, wherein the value of the transmission-reception phase difference (ΔΦ₀₁, ΔΦ₀₂, ΔΦ₀₃) is determined in step /2/ for each modulation only if at least one of the following three conditions is satisfied:
- the component of the return signal that was isolated in accordance with said modulation has an intensity greater than or equal to a predetermined intensity threshold;
- the component of the return signal that was isolated in accordance with said modulation has, with respect to the transmission radiation (R₁) that was modulated in accordance with said modulation, a zero frequency shift, or a frequency shift less than or equal to a predetermined frequency shift threshold, or greater than or equal to a predetermined frequency shift threshold, or within a predetermined frequency shift interval; and
- the component of the return signal that was isolated in accordance with said modulation has, with respect to the transmission radiation (R₁) that was modulated in accordance with said modulation, phase fluctuations below or equal to a predetermined phase fluctuation threshold.

10. Radar comprising:
- at least two juxtaposed transmission channels (10₁, 10₂, 10₃) adapted to produce respective transmission radiations (R₁) at each operation sequence of the radar;
- at least one reception channel (20), adapted to detect a return signal at each operation sequence of the radar;
- modulators (11), arranged to modulate the transmission radiation (R₁) that is produced by each transmission channel (10₁, 10₂, 10₃) in accordance with a modulation that is allocated to said transmission channel, and which is orthogonal to the modulation that is allocated to each other one of the transmission channels;
- a filtering assembly (22₁, 22₂, ...) arranged to filter the return signal in accordance with each modulation, in order to isolate a component of the return signal that has said modulation; and
- a calibration unit (103),
the radar being **characterised in that** the calibration unit (103) is adapted to implement a method that is in accordance with any one of the preceding claims.
